Europäisches Patentamt

European Patent Office

Office européen des brevets

(19)

(11) Numéro de publication : **0 169 133**

**B1**

(12) # FASCICULE DE BREVET EUROPÉEN

(45) Date de publication du fascicule du brevet :
11.01.89

(51) Int. Cl.⁴ : **G 01 B   5/00**

(21) Numéro de dépôt : **85401341.4**

(22) Date de dépôt : **03.07.85**

(54) Palpeur de mesure dimensionnelle multi-directionnel étanche.

(30) Priorité : **04.07.84 FR 8410598**

(43) Date de publication de la demande :
**22.01.86 Bulletin 86/04**

(45) Mention de la délivrance du brevet :
**11.01.89 Bulletin 89/02**

(84) Etats contractants désignés :
**CH DE FR GB IT LI**

(56) Documents cités :
**DE--A-- 2 504 291**
**FR--A-- 1 017 503**
**FR--A-- 2 155 581**
**FR--A-- 2 303 267**
**GB--A--   813 830**
**US--A-- 3 922 791**
**US--A-- 4 187 614**

(73) Titulaire : **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur : **Chomel, Claude André René**
**8, rue de Malabry**
**F-91720 Maisse (FR)**
Inventeur : **Collot, André Claude Félix**
**16, rue des Noyers**
**F-91540 Mennecy (FR)**

(74) Mandataire : **Moinat, François**
**S.N.E.C.M.A. Service des Brevets Boîte Postale 81**
**F-91003 Evry Cédex (FR)**

EP 0 169 133 B1

## Description

La présente invention concerne un palpeur de mesure dimensionnelle multidirectionnel étanche. Ce palpeur est notamment adapté à l'utilisation sur une machine-outil à commande numérique, en association avec un indicateur de mesure de type connu, mécanique ou électronique.

Dans le cas de cette application sur machine-outil à commande numérique, le palpeur selon l'invention peut être utilisé pour tout contrôle de cotes, notamment pour le contrôle d'outil et la mesure de localisation d'une pointe d'outil et également pour le contrôle de cotes de pièces usinées sur la machine-outil, ce contrôle de pièces pouvant être effectué en statique ou en dynamique.

FR-A-2 011 609 décrit une sonde de contrôle tri-axiale comportant une tige de palpeur pourvue d'un élément de contact à une extrémité et d'une autre extrémité arrondie venant en contact avec un cône de translation coulissant dans le boîtier de palpeur et en contact avec un élément de transducteur. La tige comporte une portée centrale sphérique montée mobile sur un siège inférieur fixe et un siège supérieur mobile en translation à l'intérieur du boîtier. Le siège mobile et le cône de translation sont maintenus en contact respectivement avec la portée sphérique et l'extrémité arrondie de la tige par des ressorts. L'extrémité inférieure du boîtier est enfermée dans un soufflet d'étanchéité. L'extrémité arrondie de la tige de palpeur présente une surface courbe particulière permettant pour tout déplacement de l'élément de contact d'obtenir un déplacement linéaire du cône de translation.

US-A-3 660 906 concerne également une sonde de contrôle tri-axiale composée d'un élément de contact sphérique fixé à l'extrémité d'une tige montée sur rotule dans un boîtier, un coulissement axial étant en outre prévu. Cette tige coopère avec une tige de transmission associée avec des moyens de lecture. Les surfaces coopérantes des deux tiges sont réalisées de manière à obtenir une transmission de déplacement linéaire.

Le palpeur selon l'invention du genre précité comporte une tige de palpage portant à son extrémité libre un élément palpeur et prolongé à son autre extrémité par une tige de transmission qui coopère avec un élément de capteur de mesure dimensionnelle et un boîtier. Il vise à éviter certains inconvénients des dispositifs connus dans lesquels, en particulier, une amélioration de l'étanchéité est rendue nécessaire lorsque le palpeur est utilisé en présence de liquides de refroidissement de coupe sur machines ou doit dans certains cas être immergé. L'utilisation connue de ressorts ou d'éléments en cascade pour la transmission peut être également à l'origine d'imprécisions ou de variations dans les mesures.

Le palpeur de mesure dimensionnelle selon l'invention est caractérisé en ce que la paroi du boîtier située du côté de la tige de palpage est constituée d'une membrane élastiquement déformable fixée de manière étanche sur le corps du boîtier et que cette membrane constitue le support de l'ensemble formé par la tige de palpage et la tige de transmission de telle sorte que tout déplacement de l'élément palpeur à l'extrémité de la tige de palpage provoque un déplacement de la tige de transmission et en ce que les éléments de coopération entre la tige de transmission et l'élément de capteur comprennent une bille sphérique et un siège correspondant présentant une surface courbe conformée de manière que les déplacements longitudinaux de l'élément de capteur reproduisent linéairement les déplacements multidirectionnels de l'élément de palpeur à l'extrémité libre de la tige de palpage.

D'autres caractéristiques et avantages de l'invention seront mieux compris à l'aide de la description qui va suivre en référence aux dessins annexés dans lesquels :

- la figure 1 représente une vue schématique en perspective avec arraché montrant un palpeur de mesure dimensionnelle conforme à l'invention,
- la figure 2 représente une vue en coupe longitudinale du palpeur représenté à la figure 1,
- la figure 3 représente une vue partielle en coupe longitudinale d'un palpeur conforme à l'invention selon une variante,
- la figure 4 représente une vue partielle en coupe longitudinale d'un palpeur conforme à l'invention selon une variante.

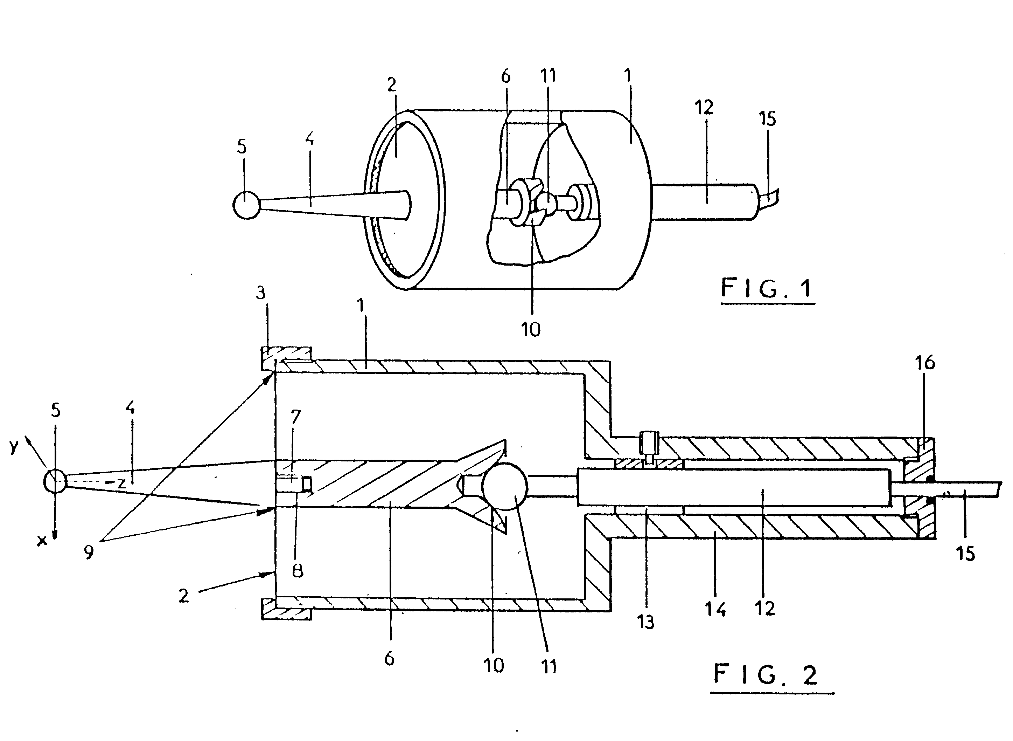

Le palpeur de mesure dimensionnelle conforme à l'invention représenté aux figures 1 et 2 se compose d'un boîtier 1 qui peut être cylindrique dans un mode de réalisation et qui contient un mécanisme. Une extrémité du boîtier 1 est fermée par une membrane 2 élastiquement déformable. Le bord de la membrane 2 est appliqué sur le corps du boîtier 1 et fixé à lui au moyen d'un couvercle 3. A l'extérieur du boîtier 1 et en appui sur la membrane 2, en son centre, est placée une tige de palpage 4. Cette tige de palpage 4 porte à son extrémité libre un élément palpeur 5 qui dans le mode de réalisation représenté a une forme sphérique. A l'intérieur du boîtier 1, dans le prolongement de la tige de palpage 4 et coopérant avec elle à une de ses extrémités est placée une tige de transmission 6. Cette tige de transmission 6 est également en appui sur la membrane 2 en son centre et les parties coopérantes de la tige de palpage 4 et de la tige de transmission 6 se composent de deux éléments mâle 7 et femelle 8 vissés. L'étanchéité au niveau du joint d'assemblage entre la membrane 2 et le corps du boîtier 1 ainsi qu'au niveau du joint d'assemblage de la tige de palpage 4 et de la tige de transmission 6 de part et d'autre de la membrane 2 peut être renforcée par le dépôt d'un vernis ou d'une pâte d'étanchéité 9. L'extrémité de la tige de transmission 6 opposée à la membrane 2 comporte un siège femelle 10 sur lequel s'adapte une bille sphérique 11. Cette bille sphérique 11 est placée à l'extrémité de l'élément de capteur 12. L'élément de capteur 12 est monté au moyen d'un palier lisse 13 interposé entre l'élément de capteur 12 et une partie 14 du boîtier 1. Cet élément de capteur 12 est relié par une liaison 15 à un indicateur de mesure de type connu ou à tout élément de contrôle ou de commande de machine susceptible d'exploiter le signal transmis. La seconde extrémité du boîtier 1 est fermée par un bouchon 16 que traverse la liaison 15.

Le fonctionnement du palpeur de mesure dimensionnelle qui vient d'être décrit est le suivant. Dans le premier cas d'une mesure dans un système de coordonnées planes X-Y, le centre géométrique de l'élément palpeur 5 se déplace lors du contact de cet élément palpeur 5 avec la pièce ou outil, à mesurer sur une surface sphérique.

La membrane élastiquement déformable 2 joue alors le rôle de palier sphérique pour l'ensemble constitué par la tige de palpage 4 et la tige de transmission 6. Le déplacement qui en résulte de ces tiges est transmis au niveau de son siège 10 à la bille sphérique 11 et provoque un déplacement uniquement longitudinal selon l'axe géométrique du palpeur de l'élément de capteur 12 qui coulisse sur son palier lisse 13. La valeur du déplacement obtenu est transmise par la liaison 15 à un indicateur de mesure à affichage direct ou à enregistrement. La surface du siège 10 coopérant avec ladite bille 11 est conformée de manière telle que la transmission des déplacements entre le siège 10 et la bille 11 se fait linéairement.

Dans le cas d'une mesure selon l'axe Z longitudinal confondu avec l'axe géométrique du palpeur, le principe de fonctionnement est identique. Mais dans ce cas, la déformation de la membrane 2 se fait uniquement dans une direction perpendiculaire au plan de la membrane au repos. On obtient à nouveau par transmission au niveau du siège 10 et de la bille sphérique 11 un déplacement longitudinal de l'élément de capteur 12.

Dans tous les cas, après déplacement de l'élément palpeur 5, cet élément reprend sa position de repos grâce au retour élastique de la membrane 2 à sa position de repos et de même l'élément de capteur 12 reprend une position zéro de la mesure par l'action correspondante du siège 10 sur la bille sphérique 11.

Dans le cas où la limitation de course imposée pour les mesures selon l'axe 2 longitudinal présente un inconvénient pour certaines utilisations, une variante du palpeur conforme à l'invention peut fournir la solution en évitant cet inconvénient.

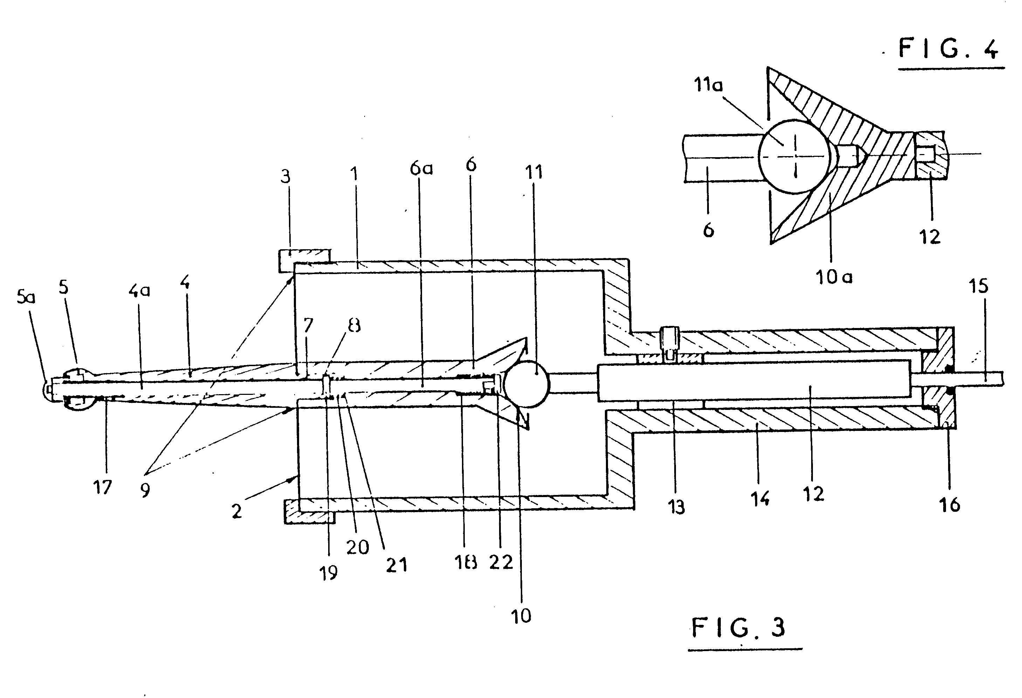

La figure 3 représente dans une vue partielle analogue à la figure 2 cette variante d'un palpeur de mesure dimensionnelle conforme à l'invention. Sur cette figure 3, les mêmes repères que ceux utilisés pour les figures 1 et 2 ont été conservés pour des pièces identiques ou des pièces remplissant les mêmes fonctions. Dans cette variante qui est utilisée préférentiellement dans certaines applications, un dispositif complémentaire a été adjoint. La tige de palpage 4 et la tige de transmission 6 incorporent ainsi suivant leur axe longitudinal une tige de palpage supplémentaire 4a et une tige de transmission coopérante supplémentaire 6a. Ces tiges 4a et 6a sont montées respectivement à l'intérieur d'un alésage ménagé longitudinalement dans les tiges 4 et 6 grâce à des moyens de guidage 17 et 18 respectivement à chaque extrémité.

A l'extrémité libre de la tige de palpage 4a est monté un élément de palpage supplémentaire 5a.

La jonction entre les tiges 4a et 6a s'effectue au moyen d'une rondelle 19 de diamètre externe légèrement supérieur à celui des tiges. Cette rondelle 19 forme le siège d'un ressort cylindrique 20 maintenu contre un épaulement 21 ménagé sur l'alésage de la tige de transmission 6. Sur l'extrémité opposée de la tige de transmission 6a est fixée une touche cylindrique 22 dont la surface plane est susceptible de coopérer avec la bille sphérique 11.

Le fonctionnement du palpeur selon la variante de la figure 3 est identique à celui qui a été décrit ci-dessus en référence aux figures 1 et 2, dans le cas d'une mesure dans un système de coordonnées planes X-Y pour laquelle l'élément palpeur 5 est utilisé. Dans le cas d'une mesure selon l'axe Z par contre, l'élément palpeur 5a entre en contact avec la pièce ou outil à mesurer et les tiges 4a et 6a se déplacent suivant cette direction Z. Le déplacement est ainsi transmis au niveau de la touche 22 à la bille sphérique 11 solidaire de l'élément de capteur 12 qui coulisse sur son palier lisse 13 comme précédemment et la valeur de déplacement est transmise par la liaison 15 à un indicateur de mesure.

Il peut également être avantageux pour les facilités de réalisation ou selon les applications envisagées de disposer différemment au niveau de la transmission du déplacement la bille sphérique et son siège coopérant. Le détail de cette variante est représenté dans la vue partielle de la figure 4, les autres éléments du palpeur restant identiques à ceux qui sont représentés sur les figures 1 et 2. Selon cette variante, la tige de transmission 6 porte à son extrémité une bille sphérique 11a et un siège femelle 10a coopérant avec ladite bille 11a est placé à l'extrémité de l'élément de capteur 12, par exemple dans le mode de réalisation représenté sous forme d'une pièce rapportée vissée à l'extrémité de cet élément de capteur 12.

Le fonctionnement du palpeur selon cette variante de la figure 4 est identique à celui qui a été décrit ci-dessus en référence avec figures 1 et 2. Dans ce cas également, la surface courbe de contact entre la bille 11a et le siège 10a est conformée sur le siège 10a de manière telle que la transmission des déplacements entre la bille 11a et le siège 10a suit des variations linéaires.

## Revendications

1. Palpeur de mesure dimensionnelle multidirectionnel étanche du genre comportant une tige de palpage (4) portant à son extrémité libre un élément palpeur (5) et prolongée à son autre extrémité par une tige de transmission (6) qui coopère avec un élément de capteur (12) de mesure dimensionnelle, et un boîtier (1), la tige de palpage (4) uniquement se trouvant à l'extérieur du boîtier (1), caractérisé en ce que la paroi du boîtier (1) située du côté de la tige de palpage (4) est constituée d'une membrane (2) élastiquement déformable fixée de manière étanche sur le corps du boîtier (1) et que cette membrane (2) constitue le support de l'ensemble formé par la tige de palpage (4) et la tige de transmission (6) de telle sorte que tout déplacement de l'élément palpeur (5) à l'extrémité de la tige de palpage (4) provoque un déplacement de la tige transmission (6), en ce que les éléments de coopération entre la tige de transmission (6) et l'élément de capteur (12) comprennent une bille sphérique (11 ; 11a) et un siège (10 ; 10a) correspondant, présentant une surface courbe conformée de manière telle que les déplacements longitudinaux de l'élément de capteur (12) reproduisent linéairement les déplacements multidirectionnels de l'élément palpeur (5) à l'extrémité libre de la tige de palpage (4).

2. Palpeur de mesure dimensionnelle selon la revendication 1 caractérisé en ce que l'élément de capteur (12) porte à son extrémité une bille sphérique (11) coopérant avec un siège (10) correspondant porté par l'extrémité de la tige de transmission (6).

3. Palpeur de mesure dimensionnelle selon la revendication 1 caractérisé en ce que la tige de transmission (6) porte à son extrémité une bille sphérique (11a) coopérant avec un siège (10a) correspondant placé à l'extrémité de l'élément de capteur (12).

4. Palpeur de mesure dimensionnelle selon l'une quelconque des revendications 1 à 3 caractérisé en ce que l'élément de palpeur (5) est une bille sphérique dont les déplacements s'effectuent selon une première et une seconde directions contenues dans un plan perpendiculaire à l'axe longitudinal du palpeur et selon une troisième direction confondue avec cet axe longitudinal du palpeur.

5. Palpeur de mesure dimensionnelle selon l'une quelconque des revendications 1, 2 et caractérisé en ce que l'élément de palpeur (5) solidaire de la tige de palpage (4) et présentant une surface externe sphérique effectue des déplacements selon une première et une seconde directions contenues dans un plan perpendiculaire à l'axe géométrique longitudinal du palpeur et en ce que une tige de faible diamètre (4a-6a) traverse l'élément de palpeur (5), la tige de palpage (4) et la tige de transmission (6) et est disposée selon leur axe géométrique longitudinal, une première extrémité de ladite tige (4a) comportant un élément de palpeur (5a) et une seconde extrémité comportant une touche (22) qui au repos est au contact avec la bille sphérique (11) de l'élément de capteur (12) de telle sorte que les déplacements selon une troisième direction confondue avec l'axe géométrique longitudinal sont transmis directement par ladite tige (4a-6a) à l'élément de capteur (12).

## Claims

1. A sealed multi-directional dimensional measuring probe comprising a probe rod (4) bearing at its free end a probe element (5) and continued at its other end by a transmission rod (6) which cooperates with a dimensional measuring pick-up element (12), and a casing (1), the probe rod (4) being situated solely outside the casing (1), characterised in that the wall of the casing (1) situated adjacent the probe rod (4) comprises an elastically deformable diaphragm (2) fixed in sealing-tight relationship to the body of the casing (1) and in that said diaphragm (2) forms the support for the system formed by the probe rod (4) and the transmission rod (6) so that any movement of the probe element (5) at the end of the probe rod (4) produces a displacement of the transmission rod (6), in that the co-operation elements between the transmission rod (6) and the pick-up element (12) comprise a spherical ball (11 ; 11a) and a corresponding seat (10 ; 10a) having a curved surface so shaped that the longitudinal movements of the pick-up element (12) linearly reproduce the multi-directional movements of the probe (5) at the free end of the probe rod (4).

2. A dimensional measuring probe according to claim 1, charazterised in that the pick-up element (12) bears at its end a spherical ball (11) co-operating with a corresponding seat (10) borne by the end of the transmission rod (6).

3. A dimensional measuring probe according to claim 1, characterised in that the transmission rod (6) bears at its end a spherical ball (11a) co-operating with a corresponding seat (10a) disposed at the end of the pick-up element (12).

4. A dimensional measuring probe according to any one of claims 1 to 3, characterised in that the probe element (5) is a spherical ball, the movements of which take place in a first and a second direction, which directions are contained in a plane perpendicular to the longitudinal axis of the probe and in a third direction coinciding with said longitudinal axis of the probe.

5. A dimensional measuring probe according to any one of claims 1, 2 and characterised in that the probe element (5) connected to the probe rod (4) and having a spherical outer surface effects movements in a first and a second direction, which directions are contained in a plane perpendicular to the longitudinal geometric axis of the probe and in that a small-diameter rod (4a-6a) extends through the probe element (5), the probe rod 4 and the transmission rod (6) and is disposed along their longitudinal geometric axis, a first end of said rod (4a) comprising a probe element (5a) and a second end comprising a button (22) which at rest is in contact with the spherical ball (11) of the pick-up element (12) so that the movements in a third direction coinciding with the longitudinal geometric axis are transmitted directly by said rod (4a-6a) to the pick-up element (12).

**Patentansprüche**

1. Abgedichteter Meßfühler zur Dimensionsmessung in mehreren Richtungen mit einem Taststift (4), der an seinem freien Ende ein Tastelement (5) trägt und an seinem andere Ende von einen Übertragungsstift (6) verlängert wird, der mit einem Aufnehmerelement (12) zur Dimensionsmessung zusammenwirkt, sowie mit einer Gehäusedose (1), wobei nur der Taststift (4) sich außerhalb der Gehäusedose (1) befindet, dadurch gekennzeichnet, daß die auf der Seite des Taststifts (4) liegende Wandung der Gehäusedose (1) aus einer elastisch verformbaren Membran (2) besteht, die unter Abdichtung an dem Körper der Gehäusedose (1) befestigt ist und die Lagerung der aus dem Taststift (4) und dem Übertragungsstift (6) bestehenden Einheit bildet, derart daß jede Verschiebung des Tastelements (5) am Ende des Taststifts (4) eine Verschiebung des Übertragungsstifts (6) bewirkt, und daß die Elemente für das Zusammenwirken zwischen dem Übertragungsstift (6) und dem Aufnehmerelement (12) eine Kugel (11 ; 11a) und einen korrespondierenden Sitz (10 ; 10a) umfassen, der eine gekrümmte Oberfläche besitzt, die so geformt ist, daß die Längsverschiebungen des Aufnehmerelements (12) die in mehreren Richtungen erfolgenden Verschiebungen des Tastelements (5) an dem freien Ende des Taststifts (4) linear reproduzieren.

2. Meßfühler zur Dimensionsmessung nach Anspruch 1, dadurch gekennzeichnet, daß das Aufnehmerelement (12) an seinem Ende eine Kugel (11) trägt, die mit einem korrespondierenden Sitz (10) zusammenwirkt, der an dem Ende des Übertragungsstifts (6) angeordnet ist.

3. Meßfühler zur Dimensionsmessung nach Anspruch 1, dadurch gekennzeichnet, daß der Übertragungsstift (6) an seinem Ende eine Kugel (11a) trägt, die mit einem korrespondierenden Sitz (10a) zusammenwirkt, der an dem Ende des Aufnehmerelements (12) angeordnet ist.

4. Meßfühler zur Dimensionsmessung nach einem der Ansprüche 1 bis 3, dadurch gekennzeichnet, daß das Tastelement (5) eine Kugel ist, deren Verschiebungen in einer ersten und einer zweiten Richtung, die in einer zur Längsachse des Meßfühlers senkrechten Ebene liegen, sowie in einer dritten Richtung erfolgen, die mit dieser Längsachse des Meßfühlers zusammenfällt.

5. Meßfühler zur Dimensionsmessung nach einem der Ansprüche 1 und 2, dadurch gekennzeichnet, daß das Tastelement (5), das mit dem Taststift (5) fest verbunden ist und eine sphärische Außenfläche besitzt, Verschiebungen in einer ersten und einer zweiten Richtung ausführt, die in einer zur geometrischen Längsachse des Meßfühlers senkrechten Ebene enthalten sind, daß ein Stift (4a-6a) geringen Durchmessers das Tastelement (5), den Taststift (4) und den Übertragungsstift (6) durchdringt und in deren geometrischer Längsachse angeordnet ist, und daß ein erstes Ende des Stift (4a) ein Tastelement (5a) und ein zweites Ende ein Anlageelement (22) aufweist, die im Ruhezustand mit der Kugel (11) des Aufnehmerelements (12) in Kontakt steht, so daß die Verschiebung in einer dritten Richtung, die mit der geometrischen Längsachse zusammenfällt, von dem genannten Stift (4a-6a) direkt auf das Aufnehmerelement (12) übertragen werden.

FIG. 1

FIG. 2

EP 0 169 133 B1

FIG. 4

FIG. 3

EP 0 169 133 B1